# EUROPEAN PATENT APPLICATION

(11) **EP 4 783 389 A1**
(43) Date of publication of application: **29.07.2026**
(21) Application number: 25382039.3
(22) Date of filing: 23.01.2025
(51) Int. Cl.: H02G 3/06

(54) **CABLE CHANNEL ASSEMBLY, AND CORRESPONDING CABLE-HOLDER COMPONENT**

(71) Applicant: Unex Aparellaje Electrico S.L., 08005 Barcelona (ES)
(72) Inventor: García Villanueva, Amanda, 08005 Barcelona (ES)
(74) Representative: Curell Suñol S.L.P.

(57) **Abstract**

The present invention relates to a cable channel assembly comprising a cable channel (1) and a cable-holder component (11) coupled to same. The cable channel (1) has a straight segment with a U-shaped cross-section and an outer guide (6) on its bottom wall (2). The cable-holder component (11) comprises a channel (12) with a U-shaped cross-section, with an outer shoulder (16) on which an end of the cable channel (11) rests and a perimeter lip (17) resting on the side and bottom walls of the cable channel (1). The side walls of the cable channel (1) and of the channel (12) have fixing means. The cable-holder component (11) has on its bottom wall a lug (20) which is inserted into the outer guide (6) in the coupling position to increase the rigidity in the attachment area.

## Description

### Field of the Invention

The invention is comprised in the field of cable channels normally used to guide cables in a space. The invention applies particularly, though not exclusively, for guiding fibre optic cable bundles and other cables in data centres.

More specifically, the invention relates to a cable channel assembly, of the type comprising:
- at least one cable channel made of a polymer material, comprising a straight segment with a U-shaped cross-section, with a bottom wall, two facing side walls and an open end; there being formed on an outer face of the bottom wall, at least in the straight segment, at least one outer guide protruding from an outer face of the bottom wall and extending in the longitudinal direction of the straight segment, the outer guide having the shape of a profile with a hollow inner space, an open wall opposite the outer face of the bottom wall and an open end, the open wall comprising a continuous opening along the outer guide;
- and a cable-holder component that can be coupled to the cable channel, the cable-holder component comprising at least one channel having a U-shaped cross-section corresponding to that of the straight segment of the cable channel, with a bottom wall, two facing side walls and an open end; such that, in a coupling position, the channel of the cable-holder component and the straight segment of the cable channel are coupled to one another through their respective open ends directly, without the insertion of a third element, forming a continuous channel;

the channel of the cable-holder component comprising an outer shoulder, formed on an outer face of at least one of the side walls and the bottom wall of the channel, and a continuous perimeter lip being formed by the bottom wall and the side walls of the channel and extending between the open end of the channel and the outer shoulder such that, in the coupling position, the open end of the straight segment of the cable channel butts against the outer shoulder and the perimeter lip is introduced into the straight segment of the cable channel and rests on the bottom wall and the side walls of the straight segment;
the cable channel and the cable-holder component comprising on their side walls fixing means to fix the cable-holder component to the cable channel in the coupling position.

The invention also realtes to the cable-holder component that is part of this assembly.

### State of the Art

ES1308416U discloses a cable channel assembly of the type indicated above. The fixing means arranged in the side walls of the cable channel and of the cable-holder component described herein are designed such that they ensure a robust fixing of the cable-holder component to the cable channel, so it is not necessary to provide any fixing system on the bottom wall.

In the cable channel assemblies of the type indicated above to which the invention relates, the system formed by the outer shoulder and the perimeter lip provides, in normal conditions, a coupling resistant to bending forces on the side walls and the bottom wall. However, when the weight of the cables housed in the cable channel is very high, this weight can cause excessive bending in the attachment area between the cable-holder component and the cable channel. This bending, without jeopardizing the coupling that is held by the fixing means arranged on the side walls, is unwanted because it can distort the geometry of the surface on which the cables rest. These cable channel assemblies must be suitable for guiding fibre optic cables, and for this reason it is important to ensure that the surfaces on which the cables rest do not undergo deformations or have sharp edges.

### Description of the Invention

The purpose of the invention is to provide a cable channel assembly of the type indicated above, which better withstands a high weight of the cables without causing excessive bending in the attachment area between the cable-holder component and the cable channel, all without increasing the cost of the components of the assembly and without complicating the installation operations by a user.

This purpose is achieved by means of a cable channel assembly of the type indicated above, characterised in that it comprises in the channel of the cable-holder component, on an outer face of its bottom wall, at least one lug projecting towards the open end of the channel, facing the bottom wall and at a distance from same; said lug being sized such that, in the coupling position, it is introduced in the hollow inner space of the outer guide, through the open end of the outer guide, said lug fitting in the hollow inner space such that the open wall of the outer guide forms a stop for said lug in a direction orthogonal to the bottom wall of the cable channel.

The cable-holder component can be, for example, an elbow, a T-joint, a height change diverter, a flared or tapered segment, a receiver for the entry of cables in a device, etc. In general, the cable-holder component can be any component of a cable channel system having a channel with a U-shaped cross-section corresponding to that of the straight segment of a cable channel, to be coupled to same at its end and thereby form a continuous channel. Preferably, the cable-holder component is made of a polymer material.

In the cable channel assemblies of the type indicated above, to which the invention relates, the purpose of the outer guide on the outer face of the bottom wall of the cable channel is to provide fixing means to fix the cable channel to other elements in the assembly. To that end, a nut and screw system, for example, is used, in which the nut is introduced inside the outer guide. According to the invention, this outer guide is used in combination with the lug arranged in the cable-holder component to reinforce the bending strength in the attachment area between the bottom walls. The lug, introduced in the hollow inner space of the outer guide in the coupling position, rests against the open wall of the outer guide. The assembly formed by the outer guide and the lug resting on its open wall forms a structural element that increases the rigidity in the attachment area between the bottom walls, thereby preventing bending in this area caused by a high weight of the cables. The solution according to the invention requires very few modifications, since the outer guide already exists in the cable channels of the state of the art. It is only necessary to incorporate the lug in the cable-holder component, such that it is introduced in the outer guide as described. Moreover, the solution according to the invention does not complicate the coupling between the cable-holder component and the cable channel, which is done in the usual manner. Upon performing this coupling, the lug is introduced in the outer guide and the mentioned increase in rigidity is thereby obtained.

In known embodiments of the cable channel, said cable channel comprises a plurality of outer guides such as those described above on the outer face of the bottom wall of the straight segment, distributed widthwise on said bottom wall. According to the invention, preferably the cable-holder component comprises a plurality of lugs such as those described above which, in the coupling position, are introduced in the hollow inner space of the outer guides. A good rigidity of the attachment area between the bottom walls widthwise on the cable channel is thereby provided.

In preferred embodiments, the lug is integral with a rod extending from the lug perpendicular to same and in the direction away from the bottom wall of the channel of the cable-holder component. The lug and the rod are sized such that, in the coupling position, the rod goes through the continuous opening. The cable-holder component is associated with a tightening part which is mounted at an end of the rod protruding from the open wall, and the tightening part cooperates with the rod such that it can be operated manually to be moved towards a position closer to the bottom wall of the channel, which is held by the cooperation of the tightening part with the rod, the tightening part resting under pressure on the open wall, thereby locking the lug on the outer guide. This solution prevents the lug from sliding with respect to the outer guide, whereby further increasing the rigidity of the attachment area.

The rod and the tightening part can have various configurations. For example, solutions in which the rod and the tightening part form a bayonet-type assembly are possible, such that the user has to turn the tightening part, for example, a quarter turn to bring it to the correct tightening position. Preferably, the rod is a threaded rod and the tightening part is a nut that is screwed onto the rod and comprises a grip and a support base for resting on the open wall of the outer guide. This solution is simple and allows robust locking.

Embodiments in which the lug is formed in a single part with the cable-holder component are possible. However, the lug is preferably formed in a separate part. In preferred embodiments, the lug is formed in a reinforcement part which is a separate part with respect to the cable-holder component, and said reinforcement part is pressure coupled to a corresponding base formed in the bottom wall of the channel of the cable-holder component. This solution allows having a single cable-holder component model, to which one or more reinforcement parts with said lug can optionally be coupled when the component is intended to be used in an assembly that must withstand a high weight of the cables.

Preferably, the cable-holder component comprises at least two facing ribs on the outer face of the bottom wall of the channel, and the reinforcement part fits tightly between the two ribs when it is pressure coupled to the base. This configuration provides a particularly robust fixing of the reinforcement part to the cable-holder component.

Preferably, the base is a cylindrical toe protruding from the outer face of the bottom wall of the channel, between the two ribs, and the reinforcement part comprises a peg that is press-fitted into the cylindrical toe. This configuration facilitates the coupling of the reinforcement part to the cable-holder component by the user. Furthermore, the peg introduced into the cylindrical toe provides resistance against the force applied on the reinforcement part, through the lug, due to the weight of the cables.

Preferably, the reinforcement part comprises, at an end opposite the lug, a foot resting on the outer face of the bottom wall of the channel when said reinforcement part is pressure coupled to the base, the peg being arranged between the foot and the lug. This foot acts as a buttress to increase even further the resistance against the force applied on the reinforcement part, through the lug, due to the weight of the cables.

Preferably, the foot comprises an end wall of the reinforcement part taking up the entire width between the two ribs and prolonged through an upper wall of the reinforcement part, also taking up the entire width between the two ribs and covering the base when the reinforcement part is pressure coupled to the base. This configuration prevents access to the coupling area from the side opposite the lug, making it difficult for the reinforcement part to be uncoupled by the action of an external element.

The invention also comprises the cable-holder component that is part of the assembly described above, considered separately. Therefore, the invention comprises a cable-holder component that can be coupled to a cable channel, said cable-holder component comprising at least one channel having a U-shaped cross-section, with a bottom wall, two facing side walls and an open end. The channel of the cable-holder component comprises an outer shoulder, formed on an outer face of at least one of the side walls and the bottom wall of the channel, and a continuous perimeter lip being formed by the bottom wall and the side walls of the channel and extending between the open end of the channel and the outer shoulder. The cable-holder component comprises on its side walls fixing means to fix the cable-holder component to the cable channel. The cable-holder component also comprises in the channel, on an outer face of its bottom wall, at least one lug projecting towards the open end of the channel, facing the bottom wall and at a distance from same.

Preferably, the lug is integral with a rod extending from the lug perpendicular to same and in the direction away from the bottom wall of the channel of the cable-holder component. The cable-holder component is associated with a tightening part which is mounted at an end of the rod, said tightening part cooperating with the rod such that it can be operated manually to be moved towards a position closer to the bottom wall of the channel, which is held by the cooperation of the tightening part with the rod.

Preferably, the rod is a threaded rod and the tightening part is a nut that is screwed onto the rod and comprises a grip and a support base.

Preferably, the lug is formed in a reinforcement part which is a separate part with respect to the cable-holder component, said reinforcement part being pressure coupled to a corresponding base formed in the bottom wall of the channel of the cable-holder component.

Preferably, the cable-holder component comprises at least two facing ribs on the outer face of the bottom wall of the channel, and the reinforcement part fits tightly between the two ribs when it is pressure coupled to the base.

Preferably, the base is a cylindrical toe protruding from the outer face of the bottom wall of the channel, between the two ribs, and the reinforcement part comprises a peg that is press-fitted into the cylindrical toe.

Preferably, the reinforcement part comprises, at an end opposite the lug, a foot resting on the outer face of the bottom wall of the channel when the reinforcement part is pressure coupled to the base, the peg being arranged between the foot and the lug.

The invention also comprises other detail features shown in the following detailed description of embodiments of the invention and in the attached figures.

### Brief Description of the Drawings

The advantages and features of the invention are apparent from the following description in which, preferred embodiments of the invention in relation to the figures are described in a nonlimiting manner with respect to the scope of the main claim.
Figure 1 is a top perspective view of the assembly formed by a cable channel and a cable-holder component, in the coupling position.
Figure 2 is a top perspective view of the assembly, with the cable-holder component uncoupled from the cable channel.
Figure 3 is a front view of the cable-holder component.
Figure 4 is a front view of the cable channel.

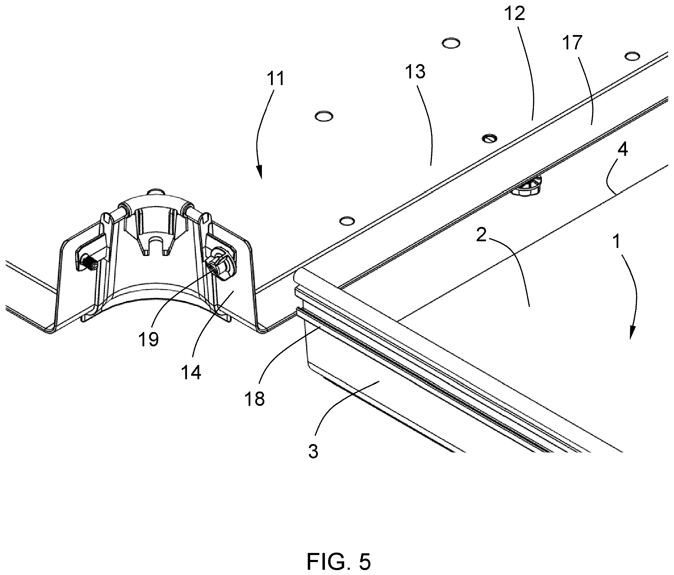

Figure 5 is an enlarged partial view of Figure 2.
Figure 6 is a bottom perspective view of the assembly, in the coupling position.
Figure 7 is an enlarged partial view of Figure 6.
Figure 8 is an enlarged partial bottom perspective view of the assembly, with the cable-holder component uncoupled from the cable channel.
Figures 9 and 10 are enlarged partial bottom perspective views of the assembly from two different angles, with the cable-holder component uncoupled from the cable channel and with the tightening part separated.
Figure 11 is an enlarged partial bottom perspective view of the assembly in the coupling position and with the tightening part separated.
Figure 12 is an enlarged partial bottom perspective view of the assembly in the coupling position and with the tightening part in the tightening position.
Figure 13 is an enlarged partial bottom perspective view, showing the reinforcement part uncoupled from the cable-holder component.
Figure 14 is a front view corresponding to that of Figure 13.
Figure 15 is a front view showing the reinforcement part coupled to the cable-holder component.
Figures 16, 17 and 18 are, respectively, a top perspective view, a bottom perspective view and a side view of the reinforcement part.

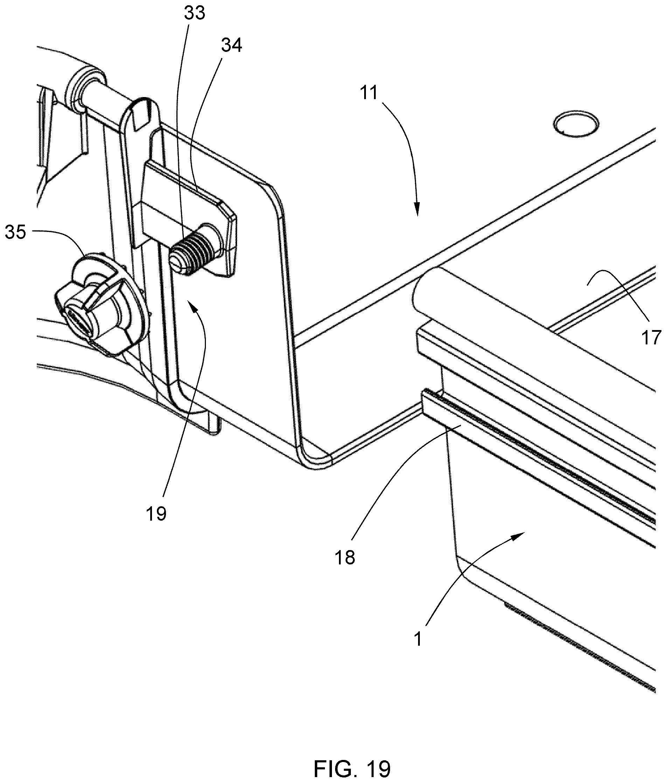

Figure 19 is an enlarged partial perspective view showing the fixing means on the side walls.

### Detailed Description of Embodiments of the Invention

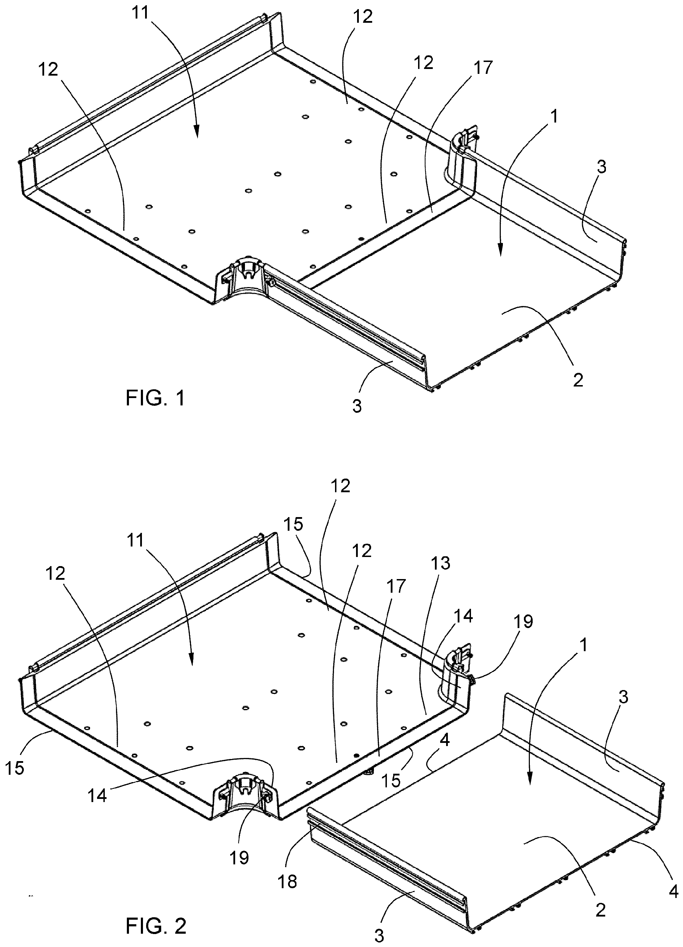

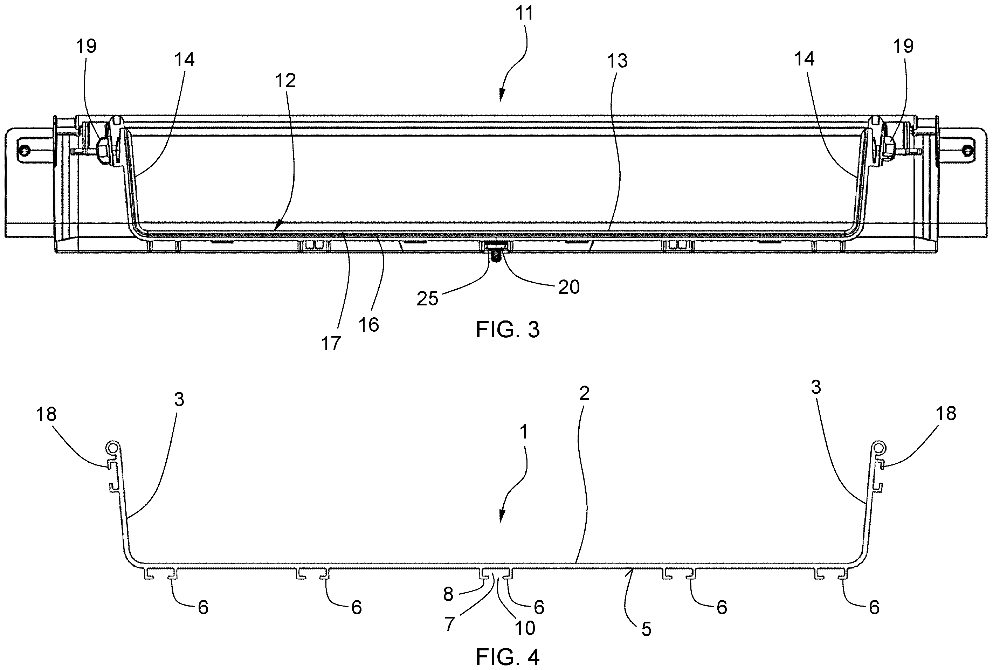

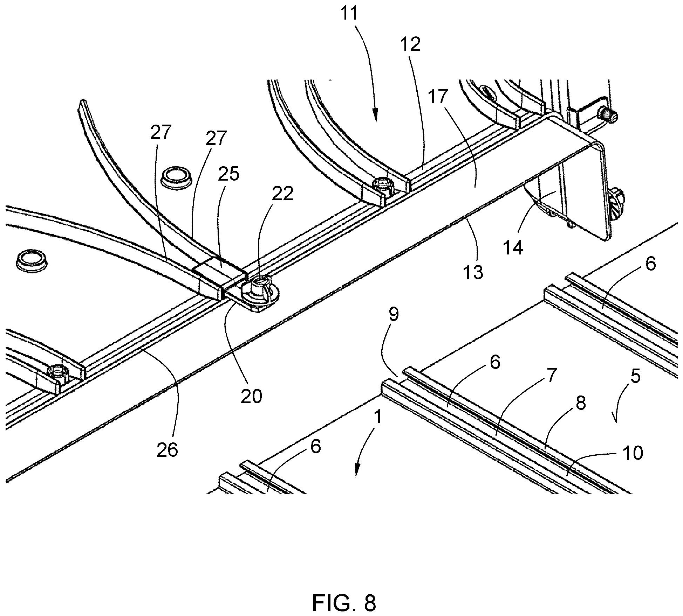

The cable channel assembly described below by way of example is mainly applied for guiding fibre optic cable bundles in data centres. It consists of a cable channel 1 and a cable-holder component 11. The cable channel 1 is made of a polymer material such as, for example, PVC (polyvinyl chloride) or ABS (acrylonitrile butadiene styrene). As can be seen in Figures 1, 2 and 4, the cable channel 1 is a straight segment of a profile having a U-shaped cross-section, with a bottom wall 2, two facing side walls 3 and two open ends 4. Five parallel identical outer guides 6 are formed on an outer face 5 of the bottom wall 2, being distributed widthwise on the bottom wall 2 of the cable channel 1, protruding from said outer face 5 and extending in the longitudinal direction of the cable channel 1 along the entire length thereof. As shown in greater detail in Figure 8, each outer guide 6 has the shape of a profile with a hollow inner space 7 and an open wall 8 opposite the outer face 5, comprising a continuous opening 10 along the entire length of the outer guide 6. The two ends of the outer guide 6 in the longitudinal direction are open ends 9.

Other embodiments of the invention in which the cable channels are not a straight segment of a U-shaped profile are possible. For example, the cable channel can be an elbow or a T-joint, with a straight end segment with the U-shaped cross-section described above.

The cable-holder component 11 described in this example is a T-joint. Other embodiments of the cable-holder component are possible, such as, for example, an elbow, a height change diverter, a flared or tapered segment, a receiver for the entry of cables in a device, etc.

As can be seen in Figures 1 and 2, the T-shaped cable-holder component 11 has three identical ends. Each of these three ends forms a channel 12 with a U-shaped cross-section corresponding to the U-shaped cross-section of the cable channel 1, with a bottom wall 13, two facing side walls 14 and an open end 15. In a coupling position, as shown in Figures 1, 6 and 7, the channel 12 of the cable-holder component 11 and the straight segment of the cable channel 1 are coupled to one another through their respective open ends 15, 4 directly, without the insertion of a third element, forming a continuous channel. Each of the three ends of the cable-holder component is thereby coupled to a cable channel 1. The figures only depict one cable channel 1, which is coupled to one of the three ends of the cable-holder component 11. Hereinafter, only this end of the cable-holder component 11 and its coupling to the corresponding cable channel 11 is described.

A continuous outer shoulder 16 is formed on the outer face of each of the two side walls 14 and the bottom wall 13 of the channel 12. The channel 12 comprises a continuous perimeter lip 17 being formed by the bottom wall 13 and the side walls 14 of the channel 12 and extending between the open end 15 and the outer shoulder 16. Preferably, the thickness of the perimeter lip 17 decreases progressively towards the open end 15. In the coupling position, the open end 4 of the straight segment of the cable channel 1 butts against the outer shoulder 16, and the perimeter lip 17 is introduced into said straight segment of the cable channel 1 and rests on the bottom wall 2 and the side walls 3 of the straight segment. In the coupled position, the perimeter lip 17 thereby provides a progressive transition surface without sharp edges between the bottom walls 2 and 13 for the seating of the cables.

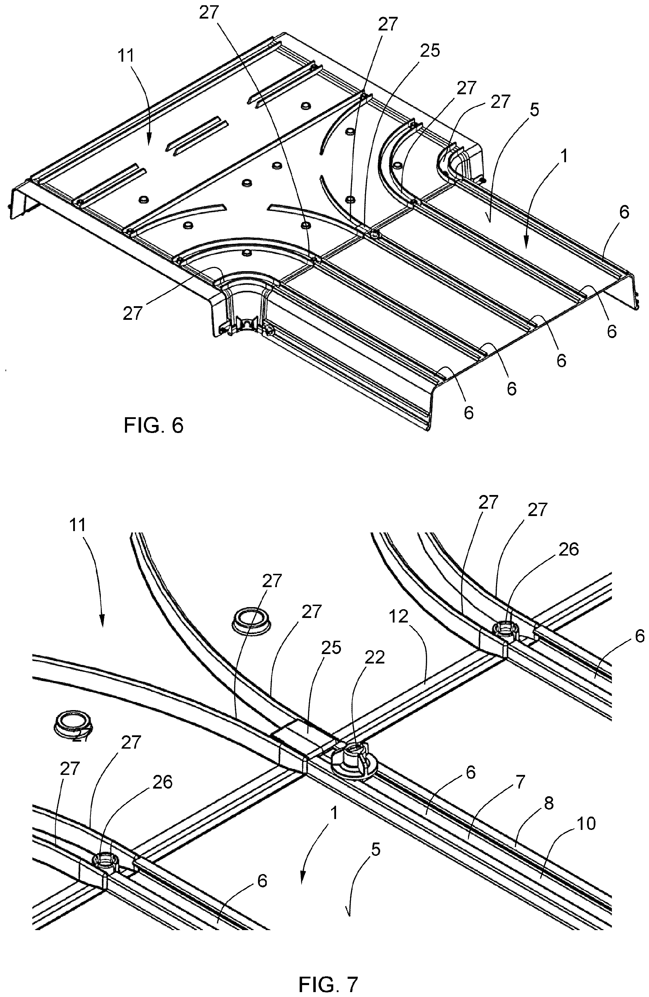

As can be seen in Figures 6 to 8, the cable-holder component 11 comprises five pairs of ribs 27 on the outer face of the bottom wall 13. Each pair of ribs comprises two facing parallel ribs 27 extending, in the segment of the channel 12, in the longitudinal direction of said channel 12. In the coupling position, each pair of ribs 27 is aligned with one of the outer guides 6. In the three central pairs of ribs shown in Figure 7 a base 26 for pressure coupling a reinforcement part 25 is formed between the two facing ribs 27, as will be seen below. The base 26 is a cylindrical toe protruding from the outer face of the bottom wall 13 of the channel 12. The figures and the following description show only one reinforcement part 25 pressure coupled to the base 26 of the central pair of ribs 27. However, it is possible to selectively place one reinforcement part 25 pressure coupled to the base 26 in each of the three pairs of ribs 27 shown in Figure 7.

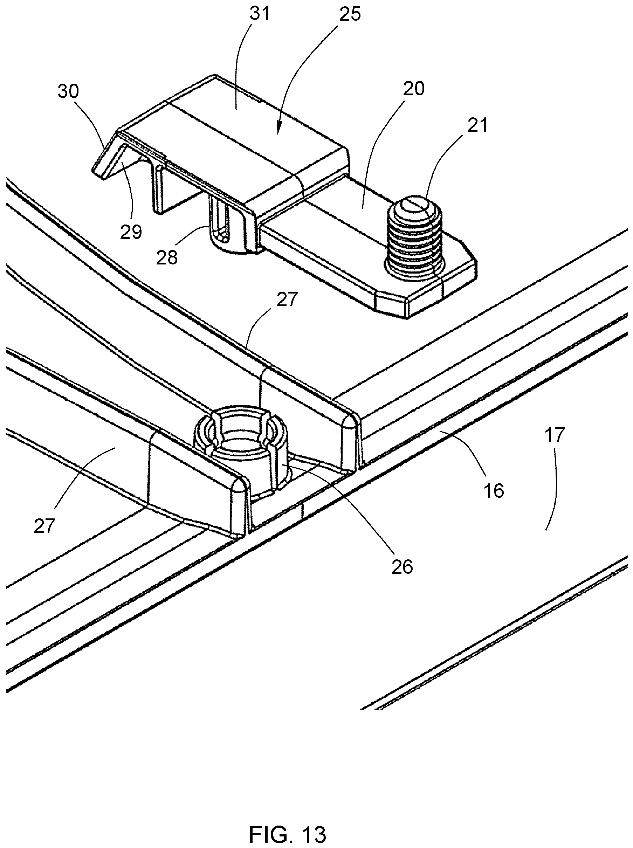

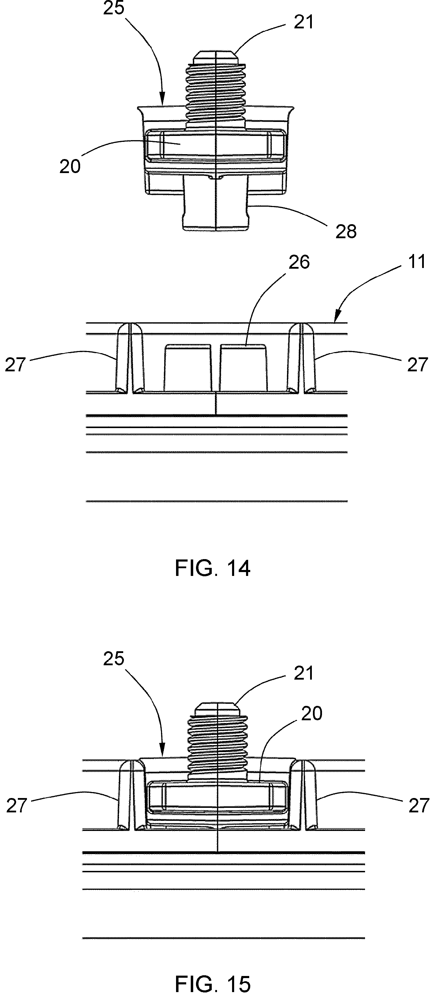

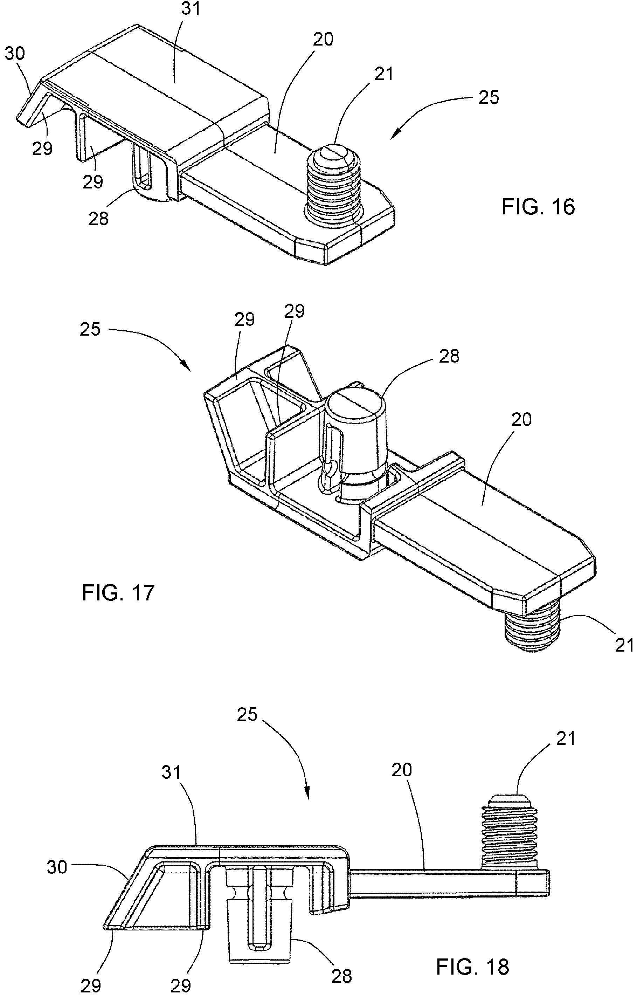

The reinforcement part 25 is a separate part with respect to the cable-holder component 11, which can be pressure coupled to each base 26 selectively to provide resistance to bending in the attachment area between the bottom walls 2, 13. As can be seen in greater detail in Figures 16 to 18, the reinforcement part 25 is made of a single part and has a main body from which a lug 20 in the form of a flat plate extends. The lug 20 is integral with a threaded rod 21 extending from said lug 20 perpendicular to same. A foot 29 is formed at an end opposite the lug 20, and a peg 28 is formed between the foot 29 and the lug 20. Preferably, the foot 29 is formed by two legs: a first straight leg closer to the peg 28 and a second inclined leg at an end opposite the peg 28. This second leg forms an end wall 30 of the reinforcement part 25, prolonged through an upper wall 31 of said reinforcement part 25. As shown in Figures 13 to 15, the reinforcement part 25 is pressure coupled to the cable-holder component 11 by press-fitting the peg 28 into the cylindrical toe forming the base 26. The reinforcement part 25 fits tightly between the two ribs 27 when it is pressure coupled to the base 26. More specifically, when the reinforcement part 25 is pressure coupled to the base 26, the end wall 30 and the upper wall 31 take up the entire width between the two ribs 27, the upper wall 31 covers the base 26, and the foot 29 rests on its two legs on the outer face of the bottom wall 13.

The cable-holder component 11 is made of a single part and is made of a polymer material such as, for example, PVC or ABS. The tightening part 22 is also made of a polymer material such as, for example, PVC or ABS.

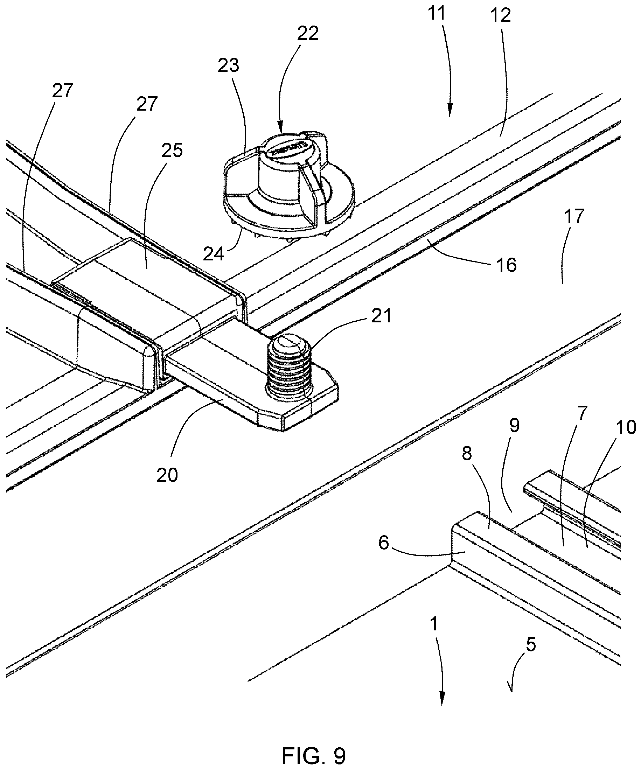

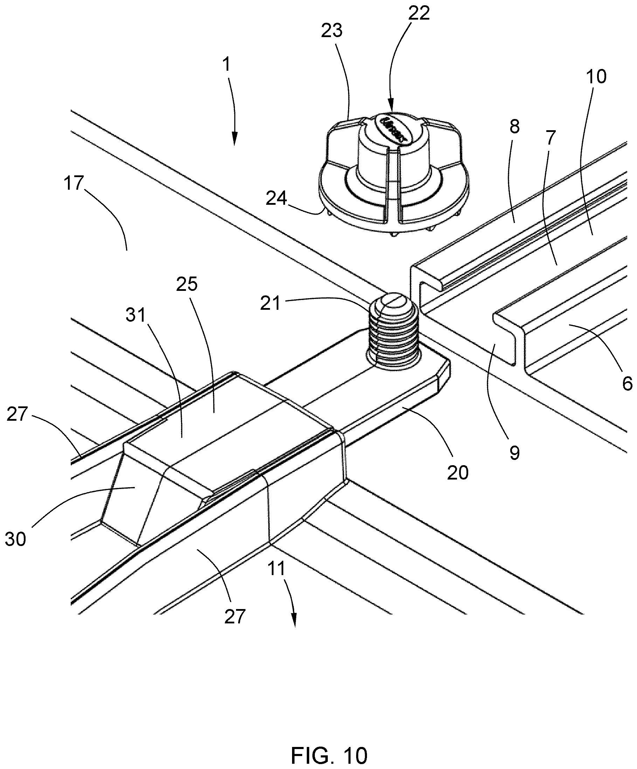

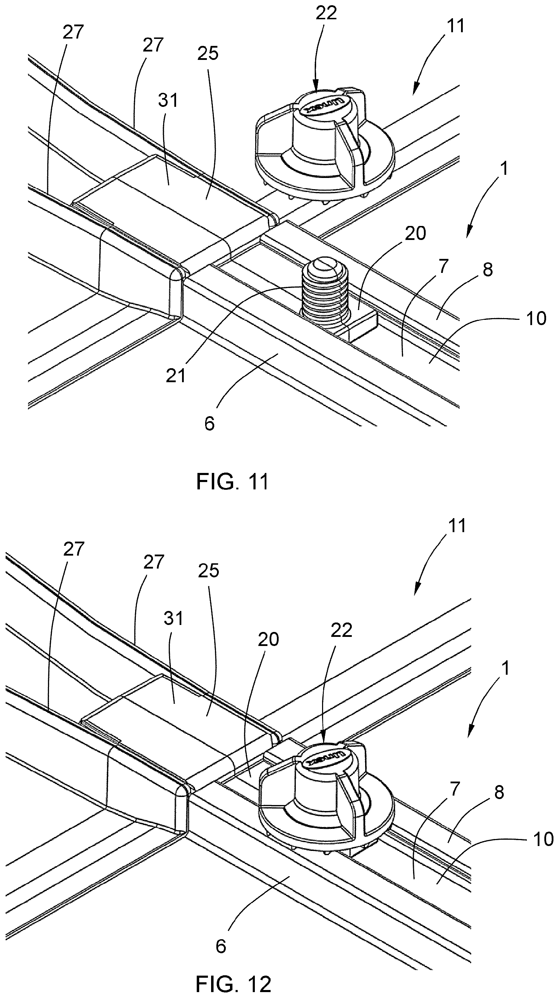

The relationship between the lug 20 of the reinforcement part 25 and the outer guide 6 can be seen in Figures 9 to 12. When the reinforcement part 25 is pressure coupled to the base 26, the lug 20 projects towards the open end 15 of the channel 12, facing the bottom wall 13 and at a distance from same. When the channel 12 of the cable-holder component 11 is placed in opposition to the cable channel 1, as in Figures 8 to 10, the lug 20 is aligned with the open end 9 of the outer guide 6. The cable-holder component 11 is coupled to the cable channel 1 by moving it towards the latter in the longitudinal direction. As can be seen in Figure 11, in the coupling position the lug 20 is introduced in the hollow inner space 7 of the outer guide 6, through its open end 9, and fits in said hollow inner space 7 such that the open wall 8 of the outer guide 6 forms a stop for the lug 20 in a direction orthogonal to the bottom wall 2. The rod 21 goes through the continuous opening 10 and protrudes with respect to the open wall 8. To secure the coupling, a tightening part 22 mounted at the end of the rod 21 protruding from the open wall 8 is used. The tightening part 22 is a nut that is screwed onto the threaded rod 21 and comprises a grip 23 to turn the tightening part 22 manually, and a support base 24. When the tightening part 22 is screwed onto the threaded rod 21, it moves towards the bottom wall 13 until resting under pressure on the open wall 8 of the outer guide 6, thereby locking the lug 20 on the outer guide 6.

As mentioned above, it is possible to pressure couple a reinforcement part 25 selectively to each of the bases 26 of the three pairs of ribs 27 shown in Figure 7. Each of these reinforcement parts 25 is related with the corresponding outer guide 6 as described.

In the coupling position, the fixing between the cable-holder component 11 and the cable channel 1 is performed by corresponding fixing means 18, 19 arranged on the side walls 3 of the straight segment of the cable channel 1 and on the side walls 14 of the channel 12 of the cable-holder component 11. Preferably, these fixing means 18, 19 are those described in document ES1308416U. The fixing means 18 on the side walls 3 are an outer guide 32 identical to the outer guide 6, being formed on an outer face of the side wall 3 and extending in the longitudinal direction of the cable channel 1. The fixing means 19 on the side walls 14 are a lug 34 with a threaded rod 33 and a tightening part 35 that is screwed onto the rod 33. The lug 34, the rod 33 and the tightening part 35 are identical to the lug 20, the rod 21 and the tightening part 22, respectively, except that the lug 34 is not formed in a separate part, but rather is a single part with the cable-holder component 11. In the coupling position, the lug 34 is introduced in the hollow inner space of the outer guide 32 of the side wall 3 and fits in said inner space in the same way that the lug 20 fits in the outer guide 6 of the bottom wall 2. The fixing is performed in the same way: by screwing the tightening part 35 onto the rod 33. It will be observed that the same known configuration of the fixing means 18, 19 arranged in the side walls 3, 14 has preferably been used for the bottom walls 2, 13, except that the lug 20 is formed in a reinforcement part 25, which is a separate part that can be pressure coupled to the cable-holder component 11. However, the function of the lug 20 is different: in the bottom walls 2, 13, the lug 20, introduced in the hollow inner space 7 of the outer guide 6, in the coupling position, has the function of increasing the rigidity in the attachment area between the bottom walls 2, 13, thereby preventing a bending from occurring in this area due to the high weight of the cables.

In other embodiments not depicted in the figures, the fixing means 18, 19 can have other different configurations.

## Claims

1. A cable channel assembly, comprising:
- at least one cable channel (1) made of a polymer material, comprising a straight segment with a U-shaped cross-section, with a bottom wall (2), two facing side walls (3) and an open end (4); there being formed on an outer face (5) of said bottom wall (2), at least in the straight segment, at least one outer guide (6) protruding from an outer face (5) of said bottom wall (2) and extending in the longitudinal direction of said straight segment, said outer guide (6) having the shape of a profile with a hollow inner space (7), an open wall (8) opposite said outer face (5) of the bottom wall (2) and an open end (9), said open wall (8) comprising a continuous opening (10) along said outer guide (6);
- and a cable-holder component (11) that can be coupled to said cable channel (1), said cable-holder component (11) comprising at least one channel (12) having a U-shaped cross-section corresponding to that of said straight segment of the cable channel (1), with a bottom wall (13), two facing side walls (14) and an open end (15); such that, in a coupling position, said channel (12) of the cable-holder component (11) and said straight segment of the cable channel (1) are coupled to one another through their respective open ends (15, 4) directly, without the insertion of a third element, forming a continuous channel;
said channel (12) of the cable-holder component (11) comprising an outer shoulder (16), formed on an outer face of at least one of said side walls (14) and said bottom wall (13) of the channel (12), and a continuous perimeter lip (17) being formed by said bottom wall (13) and said side walls (14) of the channel (12) and extending between said open end (15) of the channel (12) and said outer shoulder (16) such that, in the coupling position, said open end (4) of the straight segment of the cable channel (1) butts against said outer shoulder (16) and said perimeter lip (17) is introduced into said straight segment of the cable channel (1) and rests on said bottom wall (2) and said side walls (3) of the straight segment;
said cable channel (1) and said cable-holder component (11) comprising on their side walls (3, 14) fixing means (18, 19) to fix said cable-holder component (11) to said cable channel (1) in the coupling position;
**characterised in that** said cable-holder component (11) comprises in said channel (12), on an outer face of its bottom wall (13), at least one lug (20) projecting towards said open end (15) of the channel (12),facing said bottom wall (13) and at a distance from same; said lug (20) being sized such that, in the coupling position, it is introduced in said hollow inner space (7) of the outer guide (6), through said open end (9) of the outer guide (6), said lug (20) fitting in said hollow inner space (7) such that said open wall (8) of the outer guide (6) forms a stop for said lug (20) in a direction orthogonal to said bottom wall (2) of the cable channel (1).

2. The cable channel (1) assembly according to claim 1, wherein said cable channel (1) comprises a plurality of said outer guides (6) on said outer face (5) of the bottom wall (2) of the straight segment, distributed widthwise on said bottom wall (2), **characterised in that** said cable-holder component (11) comprises a plurality of said lugs (20) which, in the coupling position, are introduced in said hollow inner space (7) of the outer guides (6).

3. The cable channel assembly according to any one of claims 1 or 2, **characterised in that** said lug (20) is integral with a rod (21) extending from the lug (20) perpendicular to same and in the direction away from said bottom wall (13) of the channel (12) of the cable-holder component (11); said lug (20) and said rod (21) being sized such that, in the coupling position, said rod (21) goes through said continuous opening (10); said cable-holder component (11) being associated with a tightening part (22) which is mounted at an end of said rod (21) protruding from said open wall (8), said tightening part (22) cooperating with said rod (21) such that it can be operated manually to be moved towards a position closer to said bottom wall (13) of the channel (12), which is held by the cooperation of said tightening part (22) with said rod (21), said tightening part (22) resting under pressure on said open wall (8), thereby locking said lug (20) on said outer guide (6).

4. The cable channel assembly according to claim 4, **characterised in that** said rod (21) is a threaded rod and said tightening part (22) is a nut that is screwed onto said rod (21) and comprises a grip (23) and a support base (24) for resting on said open wall (8) of the outer guide (6).

5. The cable channel assembly according to any one of claims 1 to 4, **characterised in that** said lug (20) is formed in a reinforcement part (25), said reinforcement part (25) being a separate part with respect to said cable-holder component (11), and said reinforcement part (25) being pressure coupled to a corresponding base (26) formed in said bottom wall (13) of the channel (12) of the cable-holder component (11).

6. The cable channel assembly according to claim 5, **characterised in that** said cable-holder component (11) comprises at least two facing ribs (27) on said outer face of the bottom wall (13) of the channel (12), and said reinforcement part (25) fits tightly between the two ribs (27) when it is pressure coupled to said base (26).

7. The cable channel assembly according to claim 6, **characterised in that** said base (26) is a cylindrical toe protruding from the outer face of said bottom wall (13) of the channel (12), between said two ribs (27), and said reinforcement part (25) comprises a peg (28) that is press-fitted into said cylindrical toe.

8. The cable channel assembly according to claim 7, **characterised in that** said reinforcement part (25) comprises, at an end opposite said lug (20), a foot (29) resting on said outer face of the bottom wall (13) of the channel (12) when said reinforcement part (25) is pressure coupled to said base (26), said peg (28) being arranged between said foot (29) and said lug (20).

9. The cable channel assembly according to claim 8, **characterised in that** said foot (29) comprises an end wall (30) of said reinforcement part (25) taking up the entire width between said two ribs (27) and prolonged through an upper wall (31) of said reinforcement part (25), also taking up the entire width between said two ribs (27) and covering said base (26) when said reinforcement part (25) is pressure coupled to said base (26).

10. A cable-holder component (11) that can be coupled to a cable channel (1), said cable-holder component (11) comprising at least one channel (12) having a U-shaped cross-section, with a bottom wall (13), two facing side walls (14) and an open end (15); said channel (12) of the cable-holder component (11) comprising an outer shoulder (16), formed on an outer face of at least one of said side walls (14) and said bottom wall (13) of the channel (12), and a continuous perimeter lip (17) being formed by said bottom wall (13) and said side walls (14) of the channel (12) and extending between said open end (15) of the channel (12) and said outer shoulder (16); and said cable-holder component (11) comprising on its side walls (14) fixing means (19) to fix said cable-holder component (11) to said cable channel (1); **characterised in that** it comprises in said channel (12), on an outer face of its bottom wall (13), at least one lug (20) projecting towards said open end (15) of the channel (12), facing said bottom wall (13) and at a distance from same.

11. The cable-holder component (11) according to claim 10, **characterised in that** said lug (20) is integral with a rod (21) extending from said lug (20) perpendicular to same and in the direction away from said bottom wall (13) of the channel (12) of the cable-holder component (11); said cable-holder component (11) being associated with a tightening part (22) which is mounted at an end of said rod (21), said tightening part (22) cooperating with said rod (21) such that it can be operated manually to be moved towards a position closer to said bottom wall (13) of the channel (12), which is held by the cooperation of said tightening part (22) with said rod (21).

12. The cable-holder component (11) according to claim 11, **characterised in that** said rod (21) is a threaded rod and said tightening part (22) is a nut that is screwed onto said rod (21) and comprises a grip (23) and a support base (24).

13. The cable-holder component (11) according to any one of claims 10 to 12, **characterised in that** said lug (20) is formed in a reinforcement part (25), said reinforcement part (25) being a separate part with respect to said cable-holder component (11), and said reinforcement part (25) being pressure coupled to a corresponding base (26) formed in said bottom wall (13) of the channel (12) of the cable-holder component (11).

14. The cable-holder component (11) according to claim 13, **characterised in that** it comprises, on said outer face of the bottom wall (13) of the channel (12), at least two facing ribs (27), and said reinforcement part (25) fits tightly between said two ribs (27) when it is pressure coupled to said base (26).

15. The cable-holder component (11) according to claim 14, **characterised in that** said base (26) is a cylindrical toe protruding from said outer face of the bottom wall (13) of the channel (12), between said two ribs (27), and said reinforcement part (25) comprises a peg (28) that is press-fitted into said cylindrical toe.

16. The cable-holder component (11) according to claim 15, **characterised in that** said reinforcement part (25) comprises, at an end opposite said lug (20), a foot (29) resting on said outer face of the bottom wall (13) of the channel (12) when said reinforcement part (25) is pressure coupled to said base (26), said peg (28) being arranged between said foot (29) and said lug (20).
